# FASCICULE DE BREVET EUROPEEN

(11) **EP 1 283 609 B1**
(45) Date de publication et mention de la délivrance du brevet: **22.11.2006**
(21) Numéro de dépôt: 02291934.4
(22) Date de dépôt: 31.07.2002
(51) Int. Cl.: H04B 10/155

(54) **Emetteur de signaux pour fibre optique**
Signalsender für einen Lichtwellenleiter
Signal transmitter for an optical fibre

(30) Priorité: 02.08.2001 FR 0110384
(43) Date de publication de la demande: 12.02.2003
(73) Titulaire: ALCATEL, 75008 Paris (FR)
(72) Inventeur: Grandpierre, Georges, 91290 Arpajon (FR); Uhel, Roland, 29121 Clohars Carnoet (FR)
(74) Mandataire: Lamoureux, Bernard

(56) Documents cités:
- EP-A- 0 975 107
- PATENT ABSTRACTS OF JAPAN vol. 1999, no. 01, 29 janvier 1999 (1999-01-29) & JP 10 285144 A (KOKUSAI DENSHIN DENWA CO LTD <KDD>;K D D KAITEI CABLE SYST KK), 23 octobre 1998 (1998-10-23)

## Description

La présente invention se rapporte à un émetteur de signaux pour fibre optique.

Elle concerne plus précisément un émetteur de signaux optiques pour fibre optique, comportant en aval d'un laser un modulateur à électro-absorption. Un exemple d'émetteur de ce type est divulgué dans JP-A-10-285144.

Pour la transformation de signaux électriques en signaux optiques circulés par une fibre optique, deux types de modulateurs sont classiquement utilisés : les modulateurs Mach-Zehnder et les modulateurs à électro-absorption.

Les modulateurs Mach-Zehnder sont des modulateurs à cristaux, fragiles et encombrants, nécessitant une puissance électrique importante comprise entre 7 et 10 Volts.

Les modulateurs à électro-absorption sont des modulateurs à semiconducteurs, moins fragiles et moins encombrant, nécessitant une puissance électrique inférieure comprise entre 2 et 2,5 Volts.

Cependant, le phénomène appelé « chirp » optique est relativement important dans ce dernier type de modulateur. Ce phénomène entraîne une déformation des fronts montants et descendants des impulsions des signaux optiques à cause de fréquences parasites. Aussi les modulateurs à électro-absorption ne sont exploitables que pour des transmissions de courte distance, par exemple pour des interfaces entre équipements ou des réseaux téléphoniques locaux.

En particulier, le « chirp » transitoire entraîne une déformation des signaux optiques normalement carrés par la formation de pics positifs et négatifs en montée et en descente qui étalent le spectre de fréquences et génère de l'interférence intersymboles créant des problèmes de transmission de propagation.

De plus d'autres phénomènes de déformations des impulsions des signaux optiques sont dus aux défauts de l'électronique fournissant le signal.

Il apparaît en conséquence :
- Le phénomène dit de « jitter » correspondant à une translation par rapport au temps des fronts montants et descendants des impulsions des signaux optiques ;
- La déformation due aux temps de montée et de descentes desdits fronts entraînant leur courbure ;
- Une asymétrie générale des signaux optiques.

Ces déformations apparaissent dans tous les modulateurs mais le phénomène de « chirp » est particulièrement important dans les modulateurs à électro-absorption.

La présente invention résout ce problème en proposant un modulateur hybride supprimant dans les signaux optiques ces phénomènes parasites et permettant leur utilisation pour le transfert sur de grandes distances.

Pour ce faire conformément à l'invention, en aval du modulateur à électro-absorption est disposé un modulateur Mach-Zehnder contrôlé par une horloge assurant l'élimination pour chaque impulsion du signal résultant du premier modulateur d'une partie de signal dans une plage de temps comprenant le front de montée et dans une plage de temps comprenant de front de descente.

Cet agencement permet d'obtenir un signal de qualité suffisante pour une propagation longue distance, tout en utilisant une électronique peu évoluée.

De plus, le signal est régénéré ce qui est également un facteur de sa qualité.

Grâce à l'agencement conforme à l'invention, peuvent être modulée avec une grande qualité des signaux de 40 GHz de fréquence.

Selon le mode de réalisation préférée, ledit modulateur à électro-absorption est modulé en format NRZ. Et avantageusement, ledit modulateur Mach-Zehnder est modulé par ladite horloge spécifique en format RZ.

Il en résulte un signal avec des bits de même forme et sans interférence intersymboles. Côté réception un filtre passe-bas filtre l'horloge et réalise la conversion RZ en NRZ, limitant la bande de bruit.

De préférence, ladite horloge est ajustée dans le laps de temps de chaque impulsion et peut même être centrée dans ce laps de temps.

L'invention est décrite ci-après plus en détail à l'aide de figures ne représentant qu'un mode de réalisation préféré de l'invention.

La figure 1 est un schéma représentatif d'un émetteur conforme à l'invention.

La figure 2 représente les signaux optiques obtenus grâce à l'invention.

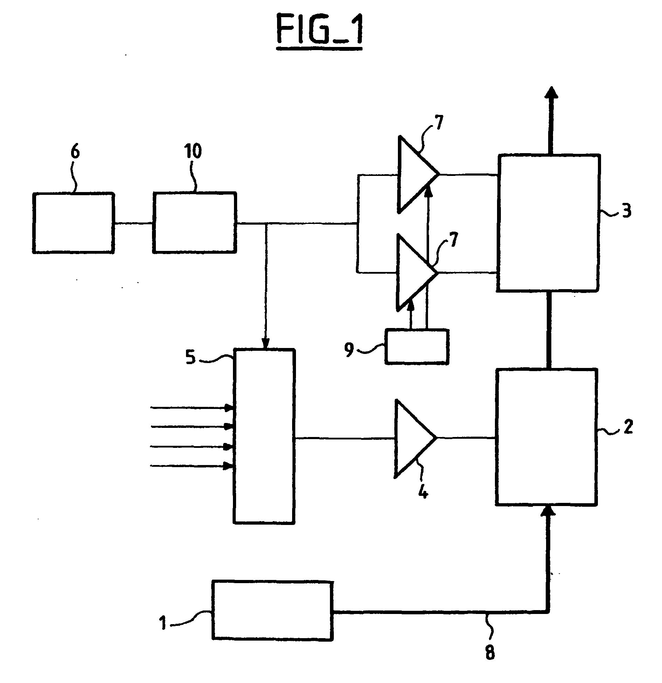

Comme représenté sur la figure 1, l'émetteur hybride de signaux optiques pour fibre optique conforme à invention comporte en aval d'un laser 1 un modulateur à électro-absorption 2 et en aval de ce modulateur 2 est disposé un modulateur Mach-Zehnder 3 contrôlé par au moins une horloge. Dans l'exemple représenté, le modulateur Mach-Zehnder 3 est à double électrode et est en conséquence commandé par deux pilotes 7.

La fibre optique 8 en sortie du laser 1 traverse donc les deux modulateurs 2, 3 disposés en série.

L'exemple représenté concerne un signal à 40 GHz et de façon classique, un multiplexeur 5 recevant en entrée quatre signaux à 10 GHz et commandé par une horloge générale 6 fournit à l'entrée d'un pilote 4 un signal électrique à 40 Gbit/s. Ce pilote 4 est avantageusement un amplificateur.

Cette horloge générale 6 gère également un pilote 7 relié à chaque électrode du modulateur Mach-Zehnder 3. Ce pilote 7 comporte un amplificateur et une horloge spécifique et est connecté de façon connue à une commande automatique de gain 9. Une ligne à retard 10 assure le réglage temporel entre le signal sortant du modulateur à électro-absorption et l'horloge spécifique entrant sur le modulateur Mach-Zhender 3.

Le modulateur à électro-absorption 2 est modulé grâce au pilote 4 en format « non retour à zéro » dit couramment NRZ et le modulateur Mach-Zehnder 3 est modulé grâce au pilote 7 en format « horloge spécifique» générant le signal RZ optique. Le bit « 1 » NRZ laisse passer l'horloge, le bit « 0 » NRZ bloque l'horloge. Ainsi le signal d'horloge est modulé en amplitude par le signal NRZ.

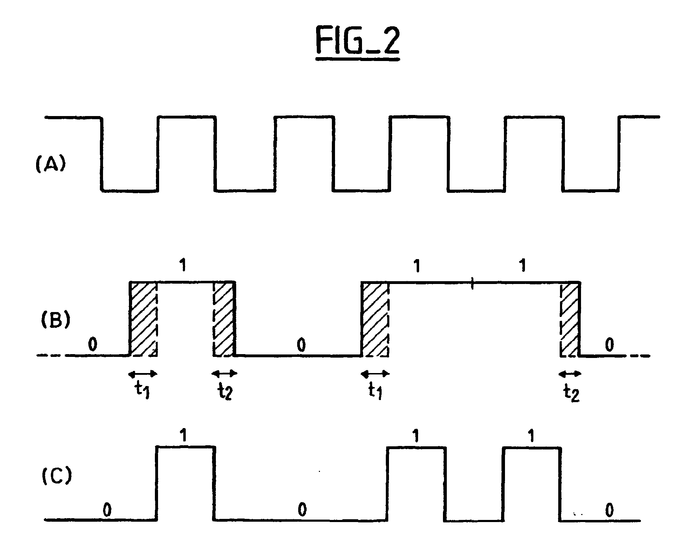

La figure 2 représente par le graphe (A) le chronogramme de l'horloge spécifique pilotant le modulateur Mach-Zehnder 3.

Le graphe (B) représente un exemple de chronograme du signal optique obtenu en sortie du modulateur à électro-absorption 2. Le signal en sortie du modulateur à électro-absorption 2 comporte trois bits dont deux adjacents. Les zones hachurées représentent les zones de déformation des fronts montants et descendants définies par expérimentation, déformations correspondantes aux phénomènes de « chirp », de « jitter », de courbure et d'asymétrie précisés en début de la description.

La sortie optique du modulateur Mach-Zehnder 3 est modulé en format « retour à zéro » dit couramment RZ entraînant de façon connue en soi la modulation du précédent signal en trois bits séparés comme représenté sur la figure 2 sur le graphe (C). Les transitions du signal optique généré sont fournies par l'horloge spécifique du modulateur Mach-Zehnder 3.

Selon l'invention, l'horloge du pilote 7 assure l'élimination pour chaque impulsion ou bit résultant du premier modulateur 2 d'une partie de signal dans une plage de temps t1 comprenant le front de montée et dans une plage de temps t2 comprenant de front de descente. Ces deux plages de temps correspondent aux zones de défauts hachurées sur le graphe (A) et sont égaux compte tenu de la symétrie des phénomènes.

A titre d'exemple, à 40Gbit/s, les temps t1, t2 représentent chacun ¼ du temps bit soit 6.25ps.

En d'autres termes, le signal émis en sortie du modulateur Mach-Zehnder 3 est systématiquement entre les zones de défauts.

Pour ce faire, l'horloge du pilote 7 est ajustée dans le laps de temps de chaque impulsion et avantageusement, comme représenté, centrée dans ledit laps de temps.

## Revendications

1. Émetteur de signaux optiques pour fibre optique, comportant un laser (1), un modulateur à électro-absorption (2) en aval dudit laser et un second modulateur (3) en aval dudit modulateur à électro-absorption, **caractérisé en ce que** ledit second modulateur est un modulateur Mach-Zehnder (3) contrôlé par au moins une horloge (7) assurant l'élimination pour chaque impulsion du signal résultant du premier modulateur (2) d'une partie de signal dans une plage de temps (t1) comprenant le front de montée et dans une plage de temps (t2) comprenant le front de descente.

2. Émetteur selon la revendication 1, **caractérisé en ce que** ledit modulateur à électro-absorption (2) est modulé en format NRZ.

3. Émetteur selon la revendication 2, **caractérisé en ce que** ledit modulateur Mach-Zehnder (3) est modulé par ladite horloge (7) en format RZ.

4. Émetteur selon la revendication 3, **caractérisé en ce que** ladite horloge (7) est ajustée dans le laps de temps de chaque impulsion.

5. Émetteur selon la revendication 4, **caractérisé en ce que** ladite horloge (7) est centrée dans ledit laps de temps.

6. Emetteur selon l'une des revendications précédentes, **caractérisé en ce que** lesdites plages de temps (t1, t2) sont égales

## Claims

1. Emitter of optical signals for optical fibres, including a loser (1), on electroabsorption modulator (2) downstream of said laser and a second modulator (3) downstream of sold electroabsorption modulator, **characterised in that** said second modulator is a Mach-Zhender modulator (3) controlled by of least one clock (7) to eliminate for each pulse of the resulting signal from the first modulator (2) a signal portion in a time range (t1) including the rising edge and in a time range (t2) including the falling edge,

2. Emitter according to claim 1, **characterised in that** said electroabsorption modulator (2) is NRZ modulated.

3. Emitter according to claim 2, **characterised in that** said Mach-Zhender modulator (3) is RZ modulated by said dock (7).

4. Emitter according to claim 3, **characterised in that** said dock (7) is adjusted in the period of each pulse.

5. Emitter according to claim 4, **characterised in that** said dock is centred in said period.

6. Emitter according to any preceding claim, **characterised in that** said time ranges (t1, t2) are equal.

## Patentansprüche

1. Optischer Signalsender für einen Lichtwellenleiter, der einen Laser (1), diesem Laser nachgelagert einen Elektroabsorptionsmodulator (2) und diesem Elektroabsorptionsmodulator nachgelagert einen zweiten Modulator (3) enthält, **dadurch gekennzeichnet, dass** dieser zweite Modulator ein Mach-Zelnder-Modulator (3) ist, der durch mindestens eine Uhr (7) gesteuert wird, und für jeden Impuls des Signals, das aus dem ersten Modulator (2) resultiert, die Unterdrückung eines Signalteils in einem Zeitbereich (t1), der die Anstiegsflanke beinhaltet, und in einem Zeitbereich (12), der die Abstiegsflanke beinhaltet, gewährleistet.

2. Sender gemäß Anspruch 1, **dadurch gekennzeichnet, dass** dieser Elektroabsorptionsmodulator (2) im Format NRZ moduliert wird.

3. Sender gemäß Anspruch 2, **dadurch gekennzeichnet, dass** dieser Mach-Zehnder-Modulator (3) durch diese Uhr (7) im Format RZ moduliert wird.

4. Sender gemäß Anspruch 3, **dadurch gekennzeichnet, dass** diese Uhr (7) im Zeitraum jedes Impulses eingestellt ist.

5. Sender gemäß Anspruch 4, **dadurch gekennzeichnet, dass** diese Uhr (7) in diesem Zeitraum zentriert ist.

6. Sender gemäß einem der vorstehenden Ansprüche, **dadurch gekennzeichnet, dass** diese Zeitbereiche (t1, t2) gleich sind.
